Europäisches Patentamt

European Patent Office

Office européen des brevets

(19)

(11) **EP 0 942 954 B1**

(12) **EUROPÄISCHE PATENTSCHRIFT**

| | |
|---|---|
| (45) Veröffentlichungstag und Bekanntmachung des Hinweises auf die Patenterteilung: **27.02.2002 Patentblatt 2002/09** | (51) Int Cl.⁷: **C09D 5/00**, C09D 5/32 |
| (21) Anmeldenummer: **97952704.1** | (86) Internationale Anmeldenummer: **PCT/DE97/02831** |
| (22) Anmeldetag: **03.12.1997** | (87) Internationale Veröffentlichungsnummer: **WO 98/24852 (11.06.1998 Gazette 1998/23)** |

(54) **BESCHICHTUNGSSTOFF**

COATING MATERIAL

MATIERE DE REVETEMENT

| | |
|---|---|
| (84) Benannte Vertragsstaaten: **AT BE CH DE DK ES FR GB IT LI NL SE** | (72) Erfinder: **Hugo, Gerd 86938 Schondorf (DE)** |
| (30) Priorität: **04.12.1996 DE 19650300** | (74) Vertreter: **HOFFMANN - EITLE Patent- und Rechtsanwälte Arabellastrasse 4 81925 München (DE)** |
| (43) Veröffentlichungstag der Anmeldung: **22.09.1999 Patentblatt 1999/38** | |
| (73) Patentinhaber: **Hugo, Gerd 86938 Schondorf (DE)** | (56) Entgegenhaltungen: **DE-A- 3 432 998**     **DE-A- 4 418 214** **DE-A- 19 501 114** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Zur Energieeinsparung bei Häusern und Gebäuden wäre es wünschenswert, wenn die Beschichtungsstoffe im Außen- und/oder Innenbereich Sonnenenergie absorbieren könnten ohne diese direkt wieder im langwelligen Bereich des thermischen Infrarot zu emittieren.

Übliche weiße Beschichtungsstoffe, die als Wandfarben eingesetzt werden, haben folgende spektrale Eigenschaften:

Die Reflexion im Wellenlängenbereich des sichtbaren Lichtes von 0,35 bis 0,7 ist über 80%. Die Absorption im Wellenlängenbereich des nahen Infrarot von 0,7 bis 2,5 μm steigt von 10% bei 0,7 μm auf etwa 50% bei 2,5μm an. Die Emission im Wellenlängenbereich des thermischen Infrarot von 8 bis 14 μm liegt üblicherweise im Mittel bei 90%.

Da die solare Einstrahlung bei ca. 1 μm ihre maximale Energie hat, wäre es jedoch wünschenswert, schon ab 0,7 μm, also direkt anschließend an den sichtbaren Bereich eine möglichst hohe Absorption durch den Beschichtungsstoff zu erzielen. So bietet die Sonne in der kurzwelligeren Hälfte des nahen Infrarot sieben mal mehr Energie als in der langwelligeren Hälfte. Weiterhin ist es wünschenswert, die absorbierte Energie nicht im langwelligen Bereich des thermischen Infrarot bei 8 bis 14 μm wieder abzustrahlen.

In der DE - A 195 01 114 sind Beschichtungsstoffe geoffenbart, welche die absorbierte Sonnenenergie im langwelligen Bereich der Wärmestrahlung nur zum Teil wieder abstrahlen. Die hier zur Absorption der Sonnenenergie eingebrachten Teilchen führen jedoch zu einer mehr oder weniger starken Dunkelfärbung des Beschichtungsstoffes im sichtbaren Bereich.

Dunkle, absorbierende Beschichtungsstoffe, die den größten Teil der Sonnenenergie aufnehmen könnten, entsprechen nicht den ästhetischen Bedürfnissen der Hausbewohner. Gewünscht sind weiße oder zumindest annähernd weiße, sehr helle Beschichtungsstoffe.

Die DE - A 195 01 114 offenbart einen derartigen Beschichtungsstoff, der zwar ein relativ helles Erscheinungsbild haben kann, jedoch einen sehr geringen Wirkungsgrad in Bezug auf die solare Absorption aufweißt.

Weiterhin ist es wünschenswert, daß Hauswände in gemäßigten bis kalten Klimazonen einen winkelabhängigen Emissionsgrad haben, der es ermöglicht, daß zum kalten Himmel wenig Energie abgestrahlt wird, die Wärmestrahlung des überwiegend wärmeren Bodens jedoch empfangen wird. In heißen Klimazonen hingegen ist es wünschenswert, den zum Himmel gerichteten Emissionsgrad möglichst groß zu wählen, da an den in Wüstenregionen überwiegend klaren Himmel Wärme abgeführt werden kann, hingegen die Wärmestrahlung der heißen Umgebung reflektiert wird.

In der DE - A 195 01 114 ist ein winkelabhängiger Emissionsgrad für eine Beschichtung nicht vorgesehen.

Aufgabe der Erfindung ist es, einen weißen, bevorzugt hellen Beschichtungsstoff darzustellen, der ein hohes Absorptionsvermögen für solare Strahlung hat und ein niedriges Emissionsvermögen im Bereich des thermischen Infrarot von 5 bis 100 μm, mindestens jedoch von 8 bis 14 μm hat. Unter einer hellen Einfärbung ist zu verstehen, daß die Reflexion des sichtbaren Lichtes im Wellenlängenbereich 0.35 bis 0.7 μm Werte von 50% und darüber einnimmt.

Mit dem erfindungsgemäß vorgeschlagenen Beschichtungsstoff ist es möglich, mit einem aus ästhetischen Gründen bevorzugtem hellen Beschichtungsstoff 30 bis 50% solarer Energie zu absorbieren. Dies ist deutlich mehr, als mit herkömmlichen hellen Beschichtungsstoffen möglich ist. Ferner wird die so gewonnene Energie nur zu ca. 50% im Wellenlängenbereich des thermischen Infrarot wieder abgestrahlt. Der Energiegewinn kann in die Hauswand eingeleitet werden. Bei herkömmlichen Beschichtungsstoffen liegt der Emissionsgrad im Wellenlängenbereich des thermischen Infrarot bei 90 bis 95%. Hier sind nur geringe Energiegewinne möglich, da die absorbierte Sonnenenergie zu 90 bis 95% wieder abgestrahlt wird.

Diese Aufgabe wird erfindungsgemäß durch einen Beschichtungsstoff gelöst, der umfaßt,

a) ein Bindemittel mit großer Transparenz von mindestens 30%, bevorzugt >50%, im Bereich des sichtbaren Lichtes von 0,35 bis 0,7 μm und mit mindestens 20%, bevorzugt > 40% im Bereich des thermischen Infrarot von 5 bis 100 μm, mindestens von 5 bis 15 μm,

b) erste, plättchenförmige Teilchen, die im Wellenlängenbereich des thermischen Infrarot von 5 bis 100 μm, mindestens jedoch von 5 bis 25 μm reflektieren und deren Abmessungen L X B X D, L = 5 - 100 μm, B = 5- 100 μm und D = 0,1 - 5 μm, bevorzugt L = 30 - 60 μm, B = 30 - 60 μm und D = 0,5 - 1,5 μm sind, wobei L = Länge, B = Breite und D = Dicke ist
und / oder erste, kugelförmige Teilchen, die im Wellenlängenbereich des thermischen Infrarot von 5 bis 100 μm, mindestens jedoch von 5 bis 25 μm rückstreuen (Mie'sche Rückstreuung) und einen Transmissonsgrad in diesem Wellenlängenbereich von mindestens 20% haben und als Einkristalle vorliegen wobei der mittlere Durchmesser der ersten, kugelförmigen Teilchen d durch die Formel

$$d = 10 \ \mu m / 2{,}1 \cdot (n_{T\,10} - n_{B\,10})$$

bestimmt ist, wobei

$n_{T\,10}$ = Brechungsindex des ersten, kugelförmigenTeilchens bei der Wellenlänge 10 μm ist und
$n_{B\,10}$ = Brechungsindex des Bindemittels bei der Wellenlänge 10 μm ist.

und / oder zweite, kugelförmige Teilchen, die im trockenen Zustand einen Hohlraum haben und / oder ausbilden, die aus einem Material bestehen, das im Bereich des thermischen Infrarot von 5 bis 100 μm, mindestens jedoch von 5 bis 25 μm einen Transmissionsgrad von > 20%, bevorzugt > 30% aufweist und die im Wellenlängenbereich des thermischen Infrarot von 5 bis 100 μm, mindestens jedoch von 5 bis 25 μm rückstreuen und / oder reflektieren und deren mittlerer Durchmesser bei 2 bis 20 μm liegt

c) zweite Teilchen, die im Wellenlängenbereich des sichtbaren Lichtes von 0,35 bis 0,7 μm reflektieren und/oder rückstreuen und im Wellenlängenbereich des thermischen Infrarot von 5 bis 100 μm, mindestens jedoch von 5 bis 25 μm einen Transmissionsgrad > 20%, bevorzugt > 40% haben und die als Einkristalle vorliegen, wobei der mittlere Durchmesser der zweiten Teilchen d durch die Formel

$$d = 0{,}55 \ \mu m / 2{,}1 \cdot (n_{T\,0.55} - n_{B\,0.55})$$

bestimmt ist, wobei

$n_{T\,0.55}$ = Brechungsindex des zweiten Teilchens bei der Wellenlänge 0,55 μm ist und
$n_{B\,0.55}$ = Brechungsindex des Bindemittels bei der Wellenlänge 0,55 μm ist.

und / oder Polymerpigmente, die im thermischen Infrarotbereich von 5 bis 100 μm, mindestens jedoch von 8 bis 14 μm einen Transmissionsgrad > 20%, bevorzugt > 30% aufweisen und die im trockenen Zustand einen Hohlraum haben und/oder ausbilden, wobei der mittlere Durchmesser der Polymerpigmentteilchen bei 0.2 bis 2 μm, bevorzugt bei 0.3 bis 1 μm liegt

d) dritte, kugelförmige Teilchen, die elektrisch leitend sind und im Bereich des thermischen Infrarot von 5 bis 25 μm eine geringe Absorption < 80%, bevorzugt < 60% aufweisen und deren mittlerer Durchmesser bei 0.1 bis 2 μm, bevorzugt bei 0.2 bis 1 μm liegt

e) sonstige, an sich bekannte Zusätze, die üblicherweise in Beschichtungen zur Anwendung kommen, nämlich Lösemittel, wie Wasser, aromatische Lösemittel, wie Testbenzin, Xylol, Toluol, polare Lösemittel wie, Alkohohle, und Verdicker, Tixothropiermittel, Entschäumer, Verteilungsmittel für die angegebenen Teilchen, Zusätze zur Verringerung der Fimbildetemperatur, wie Glykole und Benzin

Unter mittlerer Durchmesser oder mittlere Teilchengröße ist zu verstehen, daß der Durchmesser oder die Teilchengröße Werte in dem jeweils genannten Bereich annimmt und daß um diesen Wert anähernd Gaußverteilung vorliegt.

Vorteilhafte Weiterbildungen des Erfindungsgegenstandes ergeben sich aus den Unteransprüchen.

Eine vorteilhafte Weiterbildung des Erfindungsgegenstandes ist dadurch gegeben, daß das Bindemittel ausgewählt ist aus

a) aus der Gruppe der wässrigen Dispersionen und Emulsionen, die umfaßt, Dispersionen und Emulsionen auf der Basis von, Acrylat, Styrol-Acrylat, Polyäthylen, Polyäthylen-Oxidat, Ethylen-Acrylsäure-Copolymere, Methacrylat, Vinylpyrrolidon-Vinylacetat-Copolymere, Polyvinylpyrrolidon, Polyisopropylacrylat, Polyurethane und / oder

b) aus der Gruppe der lösemittelhaltigen Bindemittel, die umfaßt, Acryl, Cyclokautschuk, Butylkautschuk, Kohlenwasserstoffharz, α-Methylstyrol-Acrynitril-Copolymere, Polyesterimid, Acrylsäurebutylester, Polyacrylsäureester, Polyurethane, aliphatische Polyurethane, chlorsulfoniertes Polyäthylen und / oder

c) aus der Gruppe der thermoplastischen Materialen wie Polyolefine und Polyvinylverbindungen, insbesondere Polyäthylen, Polypropylen, Teflon, Polyamid.

Eine vorteilhafte Weiterbildung des Erfindungsgegenstandes ist dadurch gegeben, daß die ersten, plättchenförmigen Teilchen aus mindestens einem Material bestehen, das ausgewählt ist aus

a) Metall und/oder Metalllegierungen, ausgewählt aus Aluminium, Aluminiumbronze, Antimon, Chrom, Eisen, Gold, Iridium, Kupfer, Magnesium, Molybdän, Nickel, Palladium, Platin, Silber, Tantal, Wismut, Wolfram, Zink, Zinn, Bronze, Messing, Neusilber, Nickel/Chrom Legierung, Nickelin, Konstantan, Manganin und Stahl,

b) und/oder aus elektrisch nicht leitendem Materialien, die mit Metall oder Metalllegierungen ausgewählt aus Aluminium, Aluminiumbronze, Antimon, Chrom, Eisen, Gold, Iridium, Kupfer, Magnesium, Molybdän, Nickel, Palladium, Platin, Silber, Tantal, Wismut, Wolfram, Zink, Zinn, Bronze, Messing, Neusilber, Nikkel/Chrom Legierung, Nikkelin, Konstantan, Manganin, Stahl oder elektrisch leitendem Zinnoxid beschichtet und/oder überzogen sind

c) und / oder die ersten, plättchenförmigen Teilchen ausgebildet sind als Schichtpigmente, die aus mindestens drei Schichten aufgebaut sind, wobei die mittlere Schicht einen kleineren Brechungsindex hat als die äußeren Schichten und deren Materialien ausgewählt sind aus der Gruppe der Materialien, die im Wellenlängenbereich des thermischen Infrarot von 5 bis 25 μm eine Transmission > 20%, bevorzugt > 40% haben, die umfaßt

(1) anorganische Stoffe, wie Metallsulfide, ausgewählt aus Zinksulfid und Bleisulfid, Metallselenide wie Zinkselenid, Fluoride ausgewählt aus Calciumfluorid, Lithiumfluorid, Bariumfluorid und Natriumfluorid, Antimonide wie Indiumantimonid, Metalloxide ausgewählt aus Zinkoxid, Magnesiumoxid, Antimonoxid, aus Bariumtitanat, Bariumferrit, Calciumsulfat, Bariumsulfat und aus Mischkristallen der genannten Stoffe und elektrisch leitendem Zinnoxid

(2) und/oder organische Stoffe ausgewählt aus Acrylat, Styrol-Acrylat, Polyäthylen, Polyäthylen-Oxidat, chlorsulfonierte Polyäthylene, Ethylen-Acrylsäure-Copolymere, Methacrylat, Vinylpyrrolidon-Vinylacetat-Copolymere, Polyvinylpyrrolidon, Polyisopropylacrylat, Polyurethane, Cyclokautschuk, Butylkautschuk, Kohlenwasserstoffharz, α-Methylstyrol-Acrynitril-Copolymere, Polyesterimid, Acrylsäurebutylester, Polyacrylsäureester, deren Brechungsindex wahlweise durch die Zugabe von kolloidalen Metallpartikeln erhöht wird.

Eine weitere vorteilhafte Weiterbildung des Erfindungsgegenstandes ist dadurch gegeben, daß die ersten, kugelförmigen Teilchen aus mindestens einem Material bestehen, das ausgewählt ist aus
Metallsulfiden, wie Zinksulfid und Bleisulfid, aus Metallseleniden, wie Zinkselenid, aus Fluoriden, wie Calciumfluorid, Lithiumfluorid, Bariumfluorid und Natriumfluorid, aus Carbonaten, wie Calciumcarbonat oder Magnesiumcarbonat, aus Antimoniden, wie Indiumantimonid, aus Metalloxiden, wie Zinkoxid, Magnesiumoxid, Antimonoxid, aus Bariumtitanat, Bariumferrit, Calciumsulfat, Bariumsulfat und aus Mischkristallen der genannten Stoffe, ausgewählt aus Mischkristallen von Bariumsulfat mit Zinksulfid, wie die Lithopone der Sachtleben Chemie,
[0018] Eine weitere vorteilhafte Weiterbildung des Erfindungsgegenstandes ist dadurch gegeben, daß das Material der zweiten, kugelförmigen Teilchen aus mindestens einem Material bestehen, das ausgewählt ist aus
Acrylat, Styrol-Acrylat, Acrylnitril-Copolymer, Polyäthylen, Polyäthylen-Oxidat, chlorsulfoniertes Polyäthylen, Ethylen-Acrylsäure-Copolymer, Methacrylat, Vinylpyrrolidon-Vinylacetat-Copolymer, Vinyliden-Chlorid Copolymer, Polyvinylpyrrolidon, Polyisopropylacrylat, Polyurethan, aus Cyclokautschuk, Butylkautschuk, Kohlenwasserstoffharz, α-Methylstyrol-Acrynitril-Copolymer, Polyesterimid, Acrylsäurebutylester, Polyacrylsäureester
Eine weitere vorteilhafte Weiterbildung des Erfindungsgegenstandes ist dadurch gegeben, daß die zweiten Teilchen aus mindestens einem Material bestehen, das ausgewählt ist aus
Metallsulfiden wie, Zinksulfid und Bleisulfid, aus Metallseleniden, wie Zinkselenid, aus Fluoriden ausgewählt aus Calciumfluorid, Lithiumfluorid, Bariumfluorid und Natriumfluorid, aus Carbonaten, wie Calciumcarbonat oder Magnesiumcarbonat, aus Antimoniden, wie Indiumantimonid, aus Metalloxiden wie, Zinkoxid, Magnesiumoxid, Antimonoxid, aus Bariumtitanat, Bariumferrit, Calciumsulfat, Bariumsulfat und aus Mischkristallen der genannten Stoffe, wie Mischkristallen von Bariumsulfat mit Zinksulfid, wie die Lithopone der Sachtleben Chemie
Eine weitere vorteilhafte Weiterbildung des Erfindungsgegenstandes ist dadurch gegeben, daß das Material der zweiten Teilchen, die als Polymerpigment vorliegen, aus mindestens einem Material bestehen, das ausgewählt ist aus
Acrylat, Styrol-Acrylat, Acrylnitril-Copolymer, Polyäthylen, Polyäthylen-Oxidat, chlorsulfoniertes Polyäthylen, Ethylen-Acrylsäure-Copolymer, Methacrylat, Vinylpyrrolidon-Vinylacetat-Copolymer, Vinyliden-Chlorid Copolymer, Polyvinylpyrrolidon, Polyisopropylacrylat, Polyurethan, aus Cyclokautschuk, Butylkautschuk, Kohlenwasserstoffharz, α-Methylstyrol-Acrynitril-Copolymer, Polyesterimid, Acrylsäurebutylester, Polyacrylsäureester

Eine weitere vorteilhafte Weiterbildung des Erfindungsgegenstandes ist dadurch gegeben, daß es sich bei den dritten, kugelförmigen Teilchen um elektrischleitende Teilchen handelt, die im sichtbaren Bereich hell oder durchsichtig sind, aus mindestens einem Material bestehen, das ausgewählt ist aus

a) der Gruppe der Metalle wie, Aluminium, Antimon, Chrom, Eisen, Gold, Iridium, Kupfer, Magnesium, Molybdän, Nickel, Palladium, Platin, Silber, Tantal, Wismut, Wolfram, Zink und Zinn

b) und / oder aus der Gruppe der Metalllegierungen wie, Bronze, Messing, Neusilber, Nickel/Chrom, Nickelin, Konstantan, Manganin und Stahl

c) und / oder aus der Gruppe der elektrischen leitenden Polymere wie, Polypyrrol oder Polyanillin, deren Durchmesser bei 0,1 bis 1,2 mal der mittleren Wellenlänge von 0,55 µm des sichtbaren Lichtes liegt, bevorzugt kleiner als die mittlere Wellenlänge des sichtbaren Lichtes ist

d) und / oder aus der Gruppe der elektrisch leitend beschichteten Pigmente wie, aus der Gruppe der Silikate wie Talkum, Kaolin, Glimmer, Feldspat, Wollastonit, Siliziumdioxid, oder aus der Gruppe der Metalloxide wie Titandioxid oder aus Bariumsulfat, die mit Antimon-dotiertem oder mit Fluor-dotiertem Zinnoxid umhüllt sind

e) und / oder aus der Gruppe der Pigmente, die durch Dotierung mit an sich bekannten Dotierungsmitteln wie Alkali-, Ammonium- oder Erdalkalifluoride, sowie Zinn-II-Fluorid, Fluorwasserstoff und Antimon-III-Oxid hergestellt werden, wie elektrisch leitendes Zinnoxid

f) und / oder aus der Gruppe der leitfähigen Ruße, deren Durchmesser bei 0,1 bis 1,2 mal der mittleren Wellenlänge des sichtbaren Lichtes von 0,55 µm liegt, bevorzugt kleiner als die mittlere Wellenlänge des sichtbaren Lichtes ist.

g) und / oder aus der Gruppe der mineralischen Stoffe mit natürlicher, elektrischer Leitfähigkeit wie Zinkblende

Eine weitere vorteilhafte Weiterbildung des Erfindungsgegenstandes ist dadurch gegeben, daß mindestens ein weiterer Füllstoff zugegeben werden, der im Wellenlängenbereich des sichtbaren Lichtes transparent ist und im Wellenlängenbereich des thermischen Infrarot von 5 bis 100 µm, mindestens aber im Wellenlängenbereich von 5 bis 25 µm, einen geringen Brechungsindex unter 2.5 bevorzugt unter 2.0 aufweist und der in diesem Wellenlängenbereich eine geringe Absorption < 80% bevorzugt < 60% hat und dessen mittlere Teilchengröße bei 0.3 bis 30 µm bevorzugt 0.5 bis 20 µm liegt

Eine weitere vorteilhafte Weiterbildung des Erfindungsgegenstandes ist dadurch gegeben, daß der mindestens eine, weitere Füllstoff ausgewählt ist aus der Gruppe der anorganischen Füllstoffe wie Calciumcarbonat, Calciumsulfat, Calciumfluorid, Magnesiumcarbonat und/oder aus der Gruppe der organischen Füllstoffe wie Acrylat, Acrylnitril Copolymere, Vinyliden Chlorid Copolymere, Styrol-Acrylat, Polyäthylen, Polyäthylen-Oxidat, chlorsulfonierte Polyäthylene, Ethylen-Acrylsäure-Copolymere, Methacrylat, Vinylpyrrolidon-Vinylacetat-Copolymere, Polyvinylpyrrolidon, Polyisopropylacrylat, Polyurethane bestehen oder aus Cyclokautschuk, Butylkautschuk, Kohlenwasserstoffharz, $\alpha$-Methylstyrol-Acrynitril-Copolymere, Polyesterimid, Acrylsäurebutylester, Polyacrylsäureester.

Eine weitere vorteilhafte Weiterbildung des Erfindungsgegenstandes ist dadurch gegeben, daß der mindestens eine, weitere Füllstoff in der Form von Mikrohohlkugeln vorliegt und einen mittleren Durchmesser von 20 bis 250 µm, bevorzugt von 40 bis 120 µm hat.

Eine weitere vorteilhafte Weiterbildung des Erfindungsgegenstandes ist dadurch gegeben, daß zur Einfärbung im sichtbaren Bereich mindestens eine Art Farbpigment eingesetzt wird, die im Wellenlängenbereich des thermischen Infrarot von 5 bis 25 µm eine hohe Transmission > 40% bevorzugt > 60% aufweist und die im gesamten solaren Spektrum von 0.4 bis 2.5 µm eine hohe Absorption von > 30% bevorzugt > 50% aufweist, die ausgewählt ist aus der Gruppe der anorganischen Farbpigmente, insbesondere der Metalloxide wie Eisenoxide, Chromoxide aber auch Ferri-ferrocyanide der Formel $Fe_4[Fe(CN)_6]_3$ wie Mannox Eisenblau der Degussa und aus der Gruppe der organischen Farbpigmente wie das Paliogen (Marke) Schwarz S0084 der BASF aus der Gruppe der Perylene.

Eine weitere vorteilhafte Weiterbildung des Erfindungsgegenstandes ist dadurch gegeben, daß die ersten, plättchenförmigen Teilchen von der Art sind, daß sie durch ein elektrisches Feld oder ein Magnetfeld ausrichtbar sind und damit einen winkelabhängigen Emissionsgrad der Gesamtanordnung bewirken.

Eine weitere vorteilhafte Weiterbildung des Erfindungsgegenstandes ist dadurch gegeben, daß die Oberflächen reagibler Metalle und Materialien durch Fettsäuren, Chromatieren oder Phosphatieren geschützt sind.

Eine weitere vorteilhafte Weiterbildung des Erfindungsgegenstandes ist dadurch gegeben, daß es sich bei den ersten, plättchenförmigen Teilchen aus elektrisch nicht leitendem Material, um Kunstoff oder mineralischen Glimmer handelt.

Eine weitere vorteilhafte Weiterbildung des Erfindungsgegenstandes ist dadurch gegeben, daß ein Beschichtungsstoff mit einem der vorhergehenden Merkmale verwendet wird, wobei der Beschichtungsstoff die ersten, plättchenförmigen Teilchen enthalten muß und daß während und / oder nach dem Aufbringen des Beschichtungsstoffes auf einen Träger ein elektrisches Feld und / oder Magnetfeld angewendet wird.

Der Erfindungsgegenstand wird im Folgenden anhand von Beispielen näher erläutert.

**Beispiel 1**

| | |
|---|---|
| 280 g | Wasser |
| 4 g | Verdicker Tylose MH 2000 BASF |
| 300 g | Polymer-Pigment-Emulsion Ropaque OP-62 Rohm and Haas |
| 180 g | Styrrol-Acrylat-Dispersion Mowilith DM 611 Hoechst |
| 120 g | Polyäthylenoxidat Poligen WE1 BASF |
| 3 g | Entschäumer Byk 023 |
| 3 g | Pigmentverteiler N BASF |
| 70 g | Elektrisch leitendes Pigment Sacon P401 Sachtleben |
| 650 g | Sachtolith L Sachtleben |
| 40 g | Wasser |
| 70 g | Aluminium Flakes Reflexal 100 Eckart |
| 5 g | Dowanol TPM Dow Chemicals |

Die Stoffe wurden nach Dispergierung in einem Mischer auf einer handelsüblichen Farbprüfkarte, mit der auch Farbhaftung und Deckkraft geprüft werden können, aufgestrichen und nach Abtrocknung spektral vermessen.

Die Ergebnisse waren folgende:

Die Reflexion im Bereich des sichtbaren Lichtes von 0,35 bis 0,7 lag bei 78%. Die Absorption im nahen Infrarotbereich von 0,7 bis 2,5 μm lag im Mittel bei 40%. Die Emission im Bereich der Wärmestrahlung von 8 bis 14μm lag im Mittel bei 54%. Die breitbandige Vermessung der Beschichtung mit einer Thermosäule von 6 bis > 100 μm ergab einen Emissionsgrad von 51%. Der sichtoptische Eindruck war weiß. Trotz des hohen Weißgrades war die solare Absorption im nahen Infrarotbereich sehr gut. Von der so gewonnenen Sonnenenergie gingen nur 51% durch Emission verloren.

**Beispiel 2**

| | |
|---|---|
| 280 g | Wasser |
| 4 g | Verdicker Tylose MH 2000 BASF |
| 300 g | Polymer-Pigment-Emulsion Ropaque OP-62 Rohm and Haas |
| 180 g | Styrrol-Acrylat-Dispersion Mowilith DM 611 Hoechst |
| 80 g | Acrylat-Dispersion Mowilith DM 771 Hoechst |
| 40 g | Wachsemulsion Ultralube W-842 N Keim-Additec |
| 3 g | Entschäumer Byk 023 |
| 3 g | Pigmentverteiler N BASF |
| 50 g | Stabilisiertes Messingpigment utrafein Korngröße 1 μm Eckart |
| 300 g | Sachtolith L Sachtleben |
| 40 g | Wasser |
| 350 g | Harzsiegel GR Heubach |
| 110 g | Edelstahlflakes SS Fine Water Grade Novamet USA |
| 5 g | Dowanol TPM Dow Chemicals |

Die Stoffe wurden nach Dispergierung in einem Mischer auf einer handelsüblichen Farbprüfkarte, mit der auch Farbhaftung und Deckkraft geprüft werden können, aufgestrichen und nach Abtrocknung spektral vermessen.

Die Ergebnisse waren folgende:

Die Reflexion im Bereich des sichtbaren Lichtes von 0,35 bis 0,7 lag bei 75% Die Absorption im nahen Infrarotbereich von 0,7 bis 2,5 µm lag im Mittel bei 46% Die Emission im Bereich der Wärmestrahlung von 8 bis 14µm lag im Mittel bei 52%. Die breitbandige Vermessung der Beschichtung mit einer Thermosäule von 6 bis > 100 µm ergab einen Emissionsgrad von 49%.

**Beispiel 3**

| | |
|---|---|
| 320 g | Wasser |
| 6 g | Verdicker Tylose MH 2000 BASF |
| 200 g | Polymer-Pigment-Emulsion Ropaque OP-62 Rohm and Haas |
| 160 g | Styrrol-Acrylat-Dispersion Acronal 290D BASF |
| 120 g | Acrylat-Dispersion Mowilith DM 771 Hoechst |
| 3 g | Entschäumer Byk 023 |
| 3 g | Pigmentverteiler N BASF |
| 60 g | Stabilisiertes Silberpigment, mikronisiert Korngröße < 1 µm |
| 3 g | Leitruß mikronisiert, Korngröße < 0,4 µm |
| 300 g | Grobes Weißpigment aus Zinksulfid Korngröße 4 - 5 µm Sachtleben |
| 50 g | Sachtolith L Sachtleben |
| 5 g | Dowanol TPM Dow Chemicals |

Die Stoffe wurden nach Dispergierung in einem Mischer auf einer handelsüblichen Farbprüfkarte, mit der auch Farbhaftung und Deckkraft geprüft werden können, aufgestrichen und nach Abtrocknung spektral vermessen.

Die Ergebnisse waren folgende:

Die Reflexion im Bereich des sichtbaren Lichtes von 0,35 bis 0,7 lag bei 82% Die Absorption im nahen Infrarotbereich von 0,7 bis 2,5 µm lag im Mittel bei 38% Die Emission im Bereich der Wärmestrahlung von 8 bis 14µm lag im Mittel bei 55%. Die breitbandige Vermessung der Beschichtung mit einer Thermosäule von 6 bis > 100 µm ergab einen Emissionsgrad von 59%.

**Beispiel 4**

| | |
|---|---|
| 280 g | Wasser |
| 4 g | Verdicker Tylose MH 2000 BASF |
| 300 g | Polymer-Pigment-Emulsion Ropaque OP-62 Rohm and Haas |
| 120 g | Styrrol-Acrylat-Dispersion Acronal 290D BASF |
| 180 g | Acrylat-Dispersion HG-54K Rohm and Haas |
| 3 g | Entschäumer Byk 023 |
| 3 g | Pigmentverteiler N BASF |
| 90 g | Zinkblende mikronisiert d50 = 1,5 µm Metallgesellschaft |
| 500 g | Sachtolith L |
| 40 g | Wasser |
| 200 g | Harzsiegel GR Heubach |
| 150 g | Edelstahlflakes SS Fine Water Grade Novamet USA |
| 5 g | Dowanol TPM Dow Chemicals |

Die Stoffe wurden nach Dispergierung in einem Mischer auf einer handelsüblichen Farbprüfkarte, mit der auch Farbhaftung und Deckkraft geprüft werden können, aufgestrichen und nach Abtrocknung spektral vermessen.

Die Ergebnisse waren folgende:

Die Reflexion im Bereich des sichtbaren Lichtes von 0,35 bis 0,7 lag bei 73% Die Absorption im nahen Infrarotbereich von 0,7 bis 2,5 µm lag im Mittel bei 47% Die Emission im Bereich der Wärmestrahlung von 8 bis 14µm lag im Mittel bei 55%. Die breitbandige Vermessung der Beschichtung mit einer Thermosäule von 6 bis > 100 µm ergab einen Emissionsgrad von 59%.

**Beispiel 5**

| | |
|---|---|
| 350 g | Alpex Hoechst |
| 64 g | Novares LA 300 Rütger VFT AG |
| 35 g | Testbenzin 180/210 |
| 65 g | Sachtolith HD-S Sachtleben |
| 11 g | Tego Conduct UF Goldschmidt |
| 50 g | Zinkflakes Novamet USA |

Die Stoffe wurden nach Dispergierung in einem Mischer auf einer handelsüblichen Farbprüfkarte, mit der auch Farbhaftung und Deckkraft geprüft werden können, aufgestrichen und nach Abtrocknung spektral vermessen.
Die Ergebnisse waren folgende:
Die Reflexion im Bereich des sichtbaren Lichtes von 0,35 bis 0,7 lag bei 70%. Die Absorption im nahen Infrarotbereich von 0,7 bis 2,5 $\mu$m lag im Mittel bei 43%. Die Emission im Bereich der Wärmestrahlung von 8 bis 14$\mu$m lag im Mittel bei 49%. Die breitbandige Vermessung der Beschichtung mit einer Thermosäule von 6 bis > 100 $\mu$m ergab einen Emissionsgrad von 47%.

**Beispiel 6**

| | |
|---|---|
| 320 g | Wasser |
| 6 g | Verdicker Tylose MH 2000 BASF |
| 100 g | Polymer-Pigment-Emulsion Ropaque OP-62 Rohm and Haas |
| 160 g | Styrrol-Acrylat-Dispersion Acronal 290D BASF |
| 120 g | Acrylat-Dispersion Mowilith DM 771 Hoechst |
| 3 g | Entschäumer Byk 023 |
| 3 g | Pigmentverteiler N BASF |
| 0.5 g | Leitruß mikronisiert, Korngröße < 0,4 $\mu$m |
| 3 g | Paliogen Schwarz S0084 der BASF |
| 300 g | Grobes Weißpigment aus Zinksulfid Korngröße 5 - 9 $\mu$m Sachtleben |
| 100 g | Calcium Carbonat, kristallin Omya |
| 5 g | Dowanol TPM Dow Chemicals |

Die Stoffe wurden nach Dispergierung in einem Mischer auf einer handelsüblichen Farbprüfkarte, mit der auch Farbhaftung und Deckkraft geprüft werden können, aufgestrichen und nach Abtrocknung spektral vermessen.
Die Ergebnisse waren folgende:
Die Reflexion im Bereich des sichtbaren Lichtes von 0,35 bis 0,7 lag bei 70% Die Absorption im nahen Infrarotbereich von 0,7 bis 2,5 $\mu$m lag im Mittel bei 42% Die Emission im Bereich der Wärmestrahlung von 8 bis 14$\mu$m lag im Mittel bei 54%. Die breitbandige Vermessung der Beschichtung mit einer Thermosäule von 6 bis > 100 $\mu$m ergab einen Emissionsgrad von 57%.

**Beispiel 7**

| | |
|---|---|
| 320 g | Wasser |
| 6 g | Verdicker Tylose MH 2000 BASF |
| 100 g | Polymer-Pigment-Emulsion Ropaque OP-62 Rohm and Haas |
| 160 g | Styrrol-Acrylat-Dispersion Acronal 290D BASF |

(fortgesetzt)

| | |
|---|---|
| 120 g | Acrylat-Dispersion Mowilith DM 771 Hoechst |
| 3 g | Entschäumer Byk 023 |
| 3 g | Pigmentverteiler N BASF |
| 1.5 g | Leitruß mikronisiert, Korngröße < 0,4 µm |
| 200 g | Grobes Weißpigment aus Zinksulfid Korngröße 5 - 9 µm Sachtleben |
| 50 g | Calcium Carbonat, kristallin Omya |
| 4 g | Polyäthylen Mikrohohlkugeln Schüttdichte 0.03 - 0.9 g/cm$^3$ |
| 5 g | Dowanol TPM Dow Chemicals |

Die Stoffe wurden nach Dispergierung in einem Mischer auf einer handelsüblichen Farbprüfkarte, mit der auch Farbhaftung und Deckkraft geprüft werden können, aufgestrichen und nach Abtrocknung spektral vermessen.

Die Ergebnisse waren folgende:

Die Reflexion im Bereich des sichtbaren Lichtes von 0,35 bis 0,7 lag bei 78% Die Absorption im nahen Infrarotbereich von 0,7 bis 2,5 µm lag im Mittel bei 38% Die Emission im Bereich der Wärmestrahlung von 8 bis 14µm lag im Mittel bei 52%. Die breitbandige Vermessung der Beschichtung mit einer Thermosäule von 6 bis > 100 µm ergab einen Emissionsgrad von 57%.

Durch den Einsatz der Polyäthylen Mikrohohlkugeln konnte die Dichte der Farbe um 25% gesenkt werden.

**Beispiel 8**

| | |
|---|---|
| 320 g | Wasser |
| 6 g | Verdicker Tylose MH 2000 BASF |
| 100 g | Polymer-Pigment-Emulsion Ropaque OP-62 Rohm and Haas |
| 160 g | Styrrol-Acrylat-Dispersion Acronal 290D BASF |
| 120 g | Acrylat-Dispersion Mowilith DM 771 Hoechst |
| 3 g | Entschäumer Byk 023 |
| 3 g | Pigmentverteiler N BASF |
| 1 g | Leitruß mikronisiert, Korngröße < 0,4 µm |
| 2 g | Mannox Eisenblau Degussa |
| 200 g | Grobes Weißpigment aus Zinksulfid Korngröße 5 - 9 µm Sachtleben |
| 50 g | Calcium Carbonat, kristallin Omya |
| 2 g | Expancel Mikrohohlkugeln Schüttdichte 0.03 - 0.08 g/cm$^3$ |
| 5 g | Dowanol TPM Dow Chemicals |

Die Stoffe wurden nach Dispergierung in einem Mischer auf einer handelsüblichen Farbprüfkarte, mit der auch Farbhaftung und Deckkraft geprüft werden können, aufgestrichen und nach Abtrocknung spektral vermessen.

Die Ergebnisse waren folgende:

Die Reflexion im Bereich des sichtbaren Lichtes von 0,35 bis 0,7 lag bei 62% Die Absorption im nahen Infrarotbereich von 0,7 bis 2,5 µm lag im Mittel bei 44% Die Emission im Bereich der Wärmestrahlung von 8 bis 14µm lag im Mittel bei 58%. Die breitbandige Vermessung der Beschichtung mit einer Thermosäule von 6 bis > 100 µm ergab einen Emissionsgrad von 60%.

Durch den Einsatz der Mikrohohlkugeln konnte die Dichte der Farbe um 25% gesenkt werden.

**Beispiel 9**

| | |
|---|---|
| 320 g | Wasser |
| 6 g | Verdicker Tylose MH 2000 BASF |
| 100 g | Polymer-Pigment-Emulsion Ropaque OP-62 Rohm and Haas |
| 160 g | Styrrol-Acrylat-Dispersion Acronal 290D BASF |

(fortgesetzt)

| | |
|---|---|
| 120 g | Acrylat-Dispersion Mowilith DM 771 Hoechst |
| 3 g | Entschäumer Byk 023 |
| 3 g | Pigmentverteiler N BASF |
| 1.5 g | Leitruß mikronisiert, Korngröße < 0,4 μm |
| 1.5 g | Eisenoxidrot Bayferrox 720 N Bayer |
| 200 g | Grobes Weißpigment aus Zinksulfid Korngröße 5 - 9 μm Sachtleben |
| 50 g | Calcium Carbonat, kristallin Omya |
| 3 g | Polyäthylen Mikrohohlkugeln Schüttdichte 0.05 - 1.3 g/cm$^3$ |
| 5 g | Dowanol TPM Dow Chemicals |

Die Stoffe wurden nach Dispergierung in einem Mischer auf einer handelsüblichen Farbprüfkarte, mit der auch Farbhaftung und Deckkraft geprüft werden können, aufgestrichen und nach Abtrocknung spektral vermessen.

Die Ergebnisse waren folgende:

Die Reflexion im Bereich des sichtbaren Lichtes von 0,35 bis 0,7 lag bei 64% Die Absorption im nahen Infrarotbereich von 0,7 bis 2,5 μm lag im Mittel bei 47% Die Emission im Bereich der Wärmestrahlung von 8 bis 14μm lag im Mittel bei 55%. Die breitbandige Vermessung der Beschichtung mit einer Thermosäule von 6 bis > 100 μm ergab einen Emissionsgrad von 58%.

Durch den Einsatz der Polyäthylen Mikrohohlkugeln konnte die Dichte der Farbe um 20% gesenkt werden.

**Beispiel 10**

| | |
|---|---|
| 500 g | Desmoderm Finish A Bayer |
| 50 g | Desmoderm Additiv Z Bayer |
| 10 g | Elektrisch leitendes Pigment Sacon P401 Sachtleben |
| 50 g | Calcium Carbonat, kristallin Omya |
| 50 g | Sachtolith HD-S Sachtleben |
| 150 g | Edelstahlflakes SS Standard Novamet USA |

Die Stoffe wurden nach Dispergierung in einem Mischer auf eine Selbstklebefolie aufgerakelt. Im noch nassen Zustand wurden mit einem großflächigen Elektromagneten die Edelstahlflakes im Bindemittel so ausgerichtet, daß sie einen Winkel von 45° zur Flächennormalen einnahmen. Nach Abtrocknen der Beschichtung hatte die so beschichtete Selbstklebefolie einen winkelabhängigen Emissionsgrad im Bereich des thermischen Infrarot, sowie eine dunklere oder hellere Einfärbung je nach Betrachtungsrichtung.

Die Reflexion im Bereich des sichtbaren Lichtes von 0,35 bis 0,7 lag im Winkelbereich 0° bis 45° bei 35% und von 45° bis 180° bei 78%. Die Emission im Bereich der Wärmestrahlung von 8 bis 14μm lag im Winkelbereich von 0° bis 45° bei 90% und von 45° bis 180° bei 58%. Die breitbandige Vermessung der Beschichtung mit einer Thermosäule von 6 bis > 100 μm ergab einen Emissionsgrad im Winkelbereich von 0° bis 45° von 90% und von 45° bis 180° einen Emissionsgrad von 56%.

**Beispiel 11**

| | |
|---|---|
| 280 g | Wasser |
| 4 g | Verdicker Tylose MH 2000 BASF |
| 300 g | Polymer-Pigment-Emulsion Ropaque OP-62 Rohm and Haas |
| 120 g | Styrrol-Acrylat-Dispersion Acronal 290D BASF |
| 180 g | Acrylat-Dispersion HG-54K Rohm and Haas |
| 3 g | Entschäumer Byk 023 |
| 3 g | Pigmentverteiler N BASF |
| 50 g | Elektrisch leitendes Pigment Sacon P401 Sachtleben |

(fortgesetzt)

| 500 g | Sachtolith L |
|---|---|
| 40 g | Wasser |
| 200 g | Harzsiegel GR Heubach |
| 5 g | Dowanol TPM Dow Chemicals |
| 100 g | Dragon Aluminiumflitter 20/90 oberflächenbehandelt |

Die Stoffe wurden ohne die Aluminiumflitter gemischt und mit einem Farbroller auf eine senkrechte Wand aufgetragen. Mit einem elektrostatischen Beflockungsgerät wurden die Dragon Aluminiumflitter so in den noch nassen Beschichtungsstoff eingebracht, daß sie einen nach unten gerichteten Winkel von 45° zur Flächennormalen der senkrechten Wand einnahmen. Nach Abtrocknen der Beschichtung hatte die so beschichtete Wand einen winkelabhängigen Emissionsgrad im Bereich des thermischen Infrarot. Zum Himmel hatte die so beschichtete Wand einen geringeren Emissionsgrad als zum Boden.

Die Emission im Bereich der Wärmestrahlung von 8 bis 14 μm lag im Winkelbereich von 0° bis 45° bei 92% und von 45° bis 180° bei 56%. Die breitbandige Vermessung der Beschichtung mit einer Thermosäule von 6 bis > 100 μm ergab einen Emissionsgrad im Winkelbereich von 0° bis 45° von 92% und von 45° bis 180° einen Emissionsgrad von 55%.

**Vergleichsbeispiel**

Eine in der DE - A 195 01 114 genannte Rezeptur wurde der folgenden Mischung zugrunde gelegt:

| 200 g | Polyäthylendispersion Poligen PE der BASF |
|---|---|
| 200 g | Polyäthylendispersion (Oxidat) Poligen WE1 der BASF |
| 40 g | Acrylatdispersion Mowilith DM 771 Hoechst |
| 2 g | Entschäumer Byk 023 |
| 30 g | Collacral VL als Verdicker |
| 240 g | Wasser |
| 400 g | Lithopone Silbersiegel der Sachtleben GmbH |
| 80 g | Aluminiumflakes Aquasil BP 2750 von Silberline |

Die Stoffe wurden nach Dispergierung in einem Mischer auf einer handelsüblichen Farbprüfkarte, mit der auch Farbhaftung und Deckkraft geprüft werden können, aufgestrichen und nach Abtrocknung spektral vermessen.

Die Ergebnisse waren folgende:

Die Reflexion im Bereich des sichtbaren Lichtes von 0,35 bis 0,7 μm lag bei 67%.

Die Absorption im nahen Infrarotbereich von 0,7 bis 2,5 μm lag im Mittel bei 29%. Die Emission im Bereich der Wärmestrahlung von 8 bis 14 μm lag im Mittel bei 71%. Die breitbandige Vermessung der Beschichtung mit einer Thermosäule von 6 bis > 100 μm ergab einen Emissionsgrad von 68%.

Der sichtoptische Eindruck war entsprechend der geringen Reflexion im sichtbaren Bereich zu grau. Die solare Absorption im nahen Infrarotbereich ist mit 29% geringer als bei dem erfindungsgemäßen Beschichtungsstoff und die Emission im Bereich der Wärmestrahlung ist zwar geringer als die herkömmlicher Beschichtungsstoffe, aber immer noch zu hoch.

**Zusammenfassung der Meßergebnisse:**

| Beispiel | Reflexion [%] 0,35 - 0,7 μm | Absorption [%] 0,7 - 2,5 μm | Emission [%] 8 - 14 μm | Emission[%] 6 → 100 μm |
|---|---|---|---|---|
| Nummer 1 | 78 | 40 | 54 | 51 |
| Nummer 2 | 75 | 46 | 52 | 49 |
| Nummer 3 | 82 | 38 | 55 | 59 |
| Nummer 4 | 73 | 47 | 55 | 59 |
| Nummer 5 | 70 | 43 | 49 | 47 |

(fortgesetzt)

| Beispiel | Reflexion [%] 0,35 - 0,7 μm | Absorption [%] 0,7 - 2,5 μm | Emission [%] 8 - 14 μm | Emission[%] 6 → 100 μm |
|---|---|---|---|---|
| Nummer 6 | 70 | 42 | 54 | 57 |
| Nummer 7 | 78 | 38 | 52 | 57 |
| Nummer 8 | 62 | 44 | 58 | 60 |
| Nummer 9 | 64 | 47 | 55 | 58 |
| DE-A 19501114 | 67 | 29 | 71 | 68 |

**Patentansprüche**

1.  Beschichtungsstoff **gekennzeichnet durch**,

    a) ein Bindemittel mit großer Transparenz von mindestens 30%, bevorzugt >50%, im Bereich des sichtbaren Lichtes von 0,35 bis 0,7 μm und mit mindestens 20%, bevorzugt > 40% im Bereich des thermischen Infrarot von 5 bis 100 μm, mindestens von 5 bis 15 μm,

    b) erste, plättchenförmige Teilchen, die im Wellenlängenbereich des thermischen Infrarot von 5 bis 100 μm, mindestens jedoch von 5 bis 25 μm reflektieren und deren Abmessungen L X B X D, L = 5 - 100 μm, B = 5 - 100 μm und D = 0,1 - 5 μm, bevorzugt L = 30 - 60 μm, B = 30 - 60 μm und D = 0,5 - 1,5 μm sind, wobei L = Länge, B = Breite und D = Dicke ist

    und / oder erste, kugelförmige Teilchen, die im Wellenlängenbereich des thermischen Infrarot von 5 bis 100 μm, mindestens jedoch von 5 bis 25 μm rückstreuen (Mie'sche Rückstreuung) und einen Transmissonsgrad in diesem Wellenlängenbereich von mindestens 20% haben und als Einkristalle vorliegen wobei der mittlere Durchmesser der ersten, kugelförmigen Teilchen d **durch** die Formel

    $$d = 10\ \mu m / 2{,}1 \cdot (n_{T\ 10} - n_{B\ 10})$$

    bestimmt ist, wobei

    $n_{T\ 10}$ = Brechungsindex des ersten, kugelförmigenTeilchens bei der Wellenlänge 10 μm ist und
    $n_{B\ 10}$ = Brechungsindex des Bindemittels bei der Wellenlänge 10 μm ist.

    und / oder zweite, kugelförmige Teilchen, die im trockenen Zustand einen Hohlraum haben und / oder ausbilden, die aus einem Material bestehen, das im Bereich des thermischen Infrarot von 5 bis 100 μm, mindestens jedoch von 5 bis 25 μm einen Transmissionsgrad von > 20%, bevorzugt > 30% aufweist und die im Wellenlängenbereich des thermischen Infrarot von 5 bis 100 μm, mindestens jedoch von 5 bis 25 μm rückstreuen und / oder reflektieren und deren mittlerer Durchmesser bei 2 bis 20 μm liegt

    c) zweite Teilchen, die im Wellenlängenbereich des sichtbaren Lichtes von 0,35 bis 0,7 μm reflektieren und/ oder rückstreuen und im Wellenlängenbereich des thermischen Infrarot von 5 bis 100 μm, mindestens jedoch von 5 bis 25 μm einen Transmissionsgrad > 20%, bevorzugt > 40% haben und die als Einkristalle vorliegen, wobei der mittlere Durchmesser der zweiten Teilchen d **durch** die Formel

    $$d = 0{,}55\ \mu m / 2{,}1 \cdot (n_{T\ 0{,}55} - n_{B\ 0{,}55})$$

    bestimmt ist, wobei

    $n_{T\ 0{,}55}$= Brechungsindex des zweiten Teilchens bei der Wellenlänge 0,55 μm ist und
    $n_{B\ 0{,}55}$ = Brechungsindex des Bindemittels bei der Wellenlänge 0,55 μm ist.

    und / oder Polymerpigmente, die im thermischen Infrarotbereich von 5 bis 100 μm, mindestens jedoch von 8 bis 14 μm einen Transmissionsgrad > 20%, bevorzugt > 30% aufweisen und die im trockenen Zustand einen Hohlraum haben und/oder ausbilden, wobei der mittlere Durchmesser der Polymerpigmentteilchen bei 0.2 bis 2 µm, bevorzugt bei 0.3 bis 1 µm liegt

d) dritte, kugelförmige Teilchen, die elektrisch leitend sind und im Bereich des thermischen Infrarot von 5 bis 25 µm eine geringe Absorption < 80%, bevorzugt < 60% aufweisen und deren mittlerer Durchmesser bei 0.1 bis 2 µm, bevorzugt bei 0.2 bis 1 µm liegt

e) sonstige, an sich bekannte Zusätze, die üblicherweise in Beschichtungen zur Anwendung kommen, nämlich Lösemittel, wie Wasser, aromatische Lösemittel, wie Testbenzin, Xylol, Toluol, polare Lösemittel wie, Alkohohle, und Verdicker, Tixothropiermittel, Entschäumer, Verteilungsmittel für die angegebenen Teilchen, Zusätze zur Verringerung der Fimbildetemperatur, wie Glykole und Benzin

**2.** Beschichtungsstoff nach Anspruch 1 **dadurch gekennzeichnet, daß** das Bindemittel ausgewählt ist

a) aus der Gruppe der wässrigen Dispersionen und Emulsionen, die umfaßt, Dispersionen und Emulsionen auf der Basis von, Acrylat, Styrol-Acrylat, Polyäthylen, Polyäthylen-Oxidat, Ethylen-Acrylsäure-Copolymere, Methacrylat, Vinylpyrrolidon-Vinylacetat-Copolymere, Polyvinylpyrrolidon, Polyisopropylacrylat, Polyurethane und / oder

b) aus der Gruppe der lösemittelhaltigen Bindemittel, die umfaßt, Acryl, Cyclokautschuk, Butylkautschuk, Kohlenwasserstoffharz, $\alpha$-Methylstyrol-Acrynitril-Copolymere, Polyesterimid, Acrylsäurebutylester, Polyacrylsäureester, Polyurethane, aliphatische Polyurethane, chlorsulfoniertes Polyäthylen und / oder

c) aus der Gruppe der thermoplastischen Materiaten wie Polyolefine und Polyvinylverbindungen, insbesondere Polyäthylen, Polypropylen, Teflon, Polyamid.

**3.** Beschichtungsstoff nach Anspruch 1 **dadurch gekennzeichnet, daß** die ersten, plättchenförmigen Teilchen aus mindestens einem Material bestehen, das ausgewählt ist aus

a) Metall und/oder Metalllegierungen, ausgewählt aus Aluminium, Aluminiumbronze, Antimon, Chrom, Eisen, Gold, Iridium, Kupfer, Magnesium, Molybdän, Nickel, Palladium, Platin, Silber, Tantal, Wismut, Wolfram, Zink, Zinn, Bronze, Messing, Neusilber, Nickel/Chrom Legierung, Nickelin, Konstantan, Manganin und Stahl,

b) und/oder aus elektrisch nicht leitendem Materialien, die mit Metall oder Metalllegierungen ausgewählt aus Aluminium, Aluminiumbronze, Antimon, Chrom, Eisen, Gold, Iridium, Kupfer, Magnesium, Molybdän, Nickel, Palladium, Platin, Silber, Tantal, Wismut, Wolfram, Zink, Zinn, Bronze, Messing, Neusilber, Nikkel/Chrom Legierung, Nikkelin, Konstantan, Manganin, Stahl oder elektrisch leitendem Zinnoxid beschichtet und/oder überzogen sind

c) und / oder die ersten, plättchenförmigen Teilchen ausgebildet sind als Schichtpigmente, die aus mindestens drei Schichten aufgebaut sind, wobei die mittlere Schicht einen kleineren Brechungsindex hat als die äußeren Schichten und deren Materialien ausgewählt sind aus der Gruppe der Materialien, die im Wellenlängenbereich des thermischen Infrarot von 5 bis 25 µm eine Transmission > 20%, bevorzugt > 40% haben, die umfaßt

(1) anorganische Stoffe, wie Metallsulfide, ausgewählt aus Zinksulfid und Bleisulfid, Metallselenide wie Zinkselenid, Fluoride ausgewählt aus Calciumfluorid, Lithiumfluorid, Bariumfluorid und Natriumfluorid, Antimonide wie Indiumantimonid, Metalloxide ausgewählt aus Zinkoxid, Magnesiumoxid, Antimonoxid, aus Bariumtitanat, Bariumferrit, Calciumsulfat, Bariumsulfat und aus Mischkristallen der genannten Stoffe und elektrisch leitendem Zinnoxid

(2) und/oder organische Stoffe ausgewählt aus Acrylat, Styrol-Acrylat, Polyäthylen, Polyäthylen-Oxidat, chlorsulfonierte Polyäthylene, Ethylen-Acrylsäure-Copolymere, Methacrylat, Vinylpyrrolidon-Vinylacetat-Copolymere, Polyvinylpyrrolidon, Polyisopropylacrylat, Polyurethane, Cyclokautschuk, Butylkautschuk, Kohlenwasserstoffharz, $\alpha$-Methylstyrol-Acrynitril-Copolymere, Polyesterimid, Acrylsäurebutylester, Polyacrylsäureester, deren Brechungsindex wahlweise durch die Zugabe von kolloidalen Metallpartikeln erhöht wird.

**4.** Beschichtungsstoff nach Anspruch 1 **dadurch gekennzeichnet, daß** die ersten, kugelförmigen Teilchen aus mindestens einem Material bestehen, das ausgewählt ist aus

Metallsulfiden, wie Zinksulfid und Bleisulfid, aus Metallseleniden, wie Zinkselenid, aus Fluoriden, wie Calciumfluorid, Lithiumfluorid, Bariumfluorid und Natriumfluorid, aus Carbonaten, wie Calciumcarbonat oder Magnesiumcarbonat, aus Antimoniden, wie Indiumantimonid, aus Metalloxiden, wie Zinkoxid, Magnesiumoxid, Antimonoxid, aus Bariumtitanat, Bariumferrit, Calciumsulfat, Bariumsulfat und aus Mischkristallen der genannten Stoffe, ausgewählt aus Mischkristallen von Bariumsulfat mit Zinksulfid, wie die Lithopone der Sachtleben Chemie,

5. Beschichtungsstoff nach Anspruch 1 **dadurch gekennzeichnet, daß** das Material der zweiten, kugelförmigen Teilchen aus mindestens einem Material bestehen, das ausgewählt ist aus

Acrylat, Styrol-Acrylat, Acrylnitril-Copolymer, Polyäthylen, Polyäthylen-Oxidat, chlorsulfoniertes Polyäthylen, Ethylen-Acrylsäure-Copolymer, Methacrylat, Vinylpyrrolidon-Vinylacetat-Copolymer, Vinyliden-Chlorid Copolymer, Polyvinylpyrrolidon, Polyisopropylacrylat, Polyurethan, aus Cyclokautschuk, Butylkautschuk, Kohlenwasserstoffharz, $\alpha$-Methylstyrol-Acrynitril-Copolymer, Polyesterimid, Acrylsäurebutylester, Polyacrylsäureester

6. Beschichtungsstoff nach Anspruch 1 **dadurch gekennzeichnet, daß** die zweiten Teilchen aus mindestens einem Material bestehen, das ausgewählt ist aus

Metallsulfiden wie, Zinksulfid und Bleisulfid, aus Metallseleniden, wie Zinkselenid, aus Fluoriden ausgewählt aus Calciumfluorid, Lithiumfluorid, Bariumfluorid und Natriumfluorid, aus Carbonaten, wie Calciumcarbonat oder Magnesiumcarbonat, aus Antimoniden, wie Indiumantimonid, aus Metalloxiden wie, Zinkoxid, Magnesiumoxid, Antimonoxid, aus Bariumtitanat, Bariumferrit, Calciumsulfat, Bariumsulfat und aus Mischkristallen der genannten Stoffe, wie Mischkristallen von Bariumsulfat mit Zinksulfid, wie die Lithopone der Sachtleben Chemie

7. Beschichtungsstoff nach Anspruch 1 **dadurch gekennzeichnet, daß** das Material der zweiten Teilchen, die als Polymerpigment vorliegen, aus mindestens einem Material bestehen, das ausgewählt ist aus

Acrylat, Styrol-Acrylat, Acrylnitril-Copolymer, Polyäthylen, Polyäthylen-Oxidat, chlorsulfoniertes Polyäthylen, Ethylen-Acrylsäure-Copolymer, Methacrylat, Vinylpyrrolidon-Vinylacetat-Copolymer, Vinyliden-Chlorid Copolymer, Polyvinylpyrrolidon, Polyisopropylacrylat, Polyurethan, aus Cyclokautschuk, Butylkautschuk, Kohlenwasserstoffharz, $\alpha$-Methylstyrol-Acrynitril-Copolymer, Polyesterimid, Acrylsäurebutylester, Polyacrylsäureester

8. Beschichtungsstoff nach Anspruch 1 **dadurch gekennzeichnet, daß** es sich bei den dritten, kugelförmigen Teilchen um elektrischleitende Teilchen handelt, die im sichtbaren Bereich hell oder durchsichtig sind, aus mindestens einem Material bestehen, das ausgewählt ist aus

a) der Gruppe der Metalle wie, Aluminium, Antimon, Chrom, Eisen, Gold, Iridium, Kupfer, Magnesium, Molybdän, Nickel, Palladium, Platin, Silber, Tantal, Wismut, Wolfram, Zink und Zinn

b) und / oder aus der Gruppe der Metalllegierungen wie, Bronze, Messing, Neusilber, Nickel/Chrom, Nickelin, Konstantan, Manganin und Stahl

c) und / oder aus der Gruppe der elektrischen leitenden Polymere wie, Polypyrrol oder Polyanillin, deren Durchmesser bei 0,1 bis 1,2 mal der mittleren Wellenlänge von 0,55 µm des sichtbaren Lichtes liegt, bevorzugt kleiner als die mittlere Wellenlänge des sichtbaren Lichtes ist

d) und / oder aus der Gruppe der elektrisch leitend beschichteten Pigmente wie, aus der Gruppe der Silikate wie Talkum, Kaolin, Glimmer, Feldspat, Wollastonit, Siliziumdioxid, oder aus der Gruppe der Metalloxide wie Titandioxid oder aus Bariumsulfat, die mit Antimon-dotiertem oder mit Fluor-dotiertem Zinnoxid umhüllt sind

e) und / oder aus der Gruppe der Pigmente, die durch Dotierung mit an sich bekannten Dotierungsmitteln wie Alkali-, Ammonium- oder Erdalkalifluoride, sowie Zinn-II-Fluorid, Fluorwasserstoff und Antimon-III-Oxid hergestellt werden, wie elektrisch leitendes Zinnoxid

f) und / oder aus der Gruppe der leitfähigen Ruße, deren Durchmesser bei 0,1 bis 1,2 mal der mittleren Wellenlänge des sichtbaren Lichtes von 0,55 μm liegt, bevorzugt kleiner als die mittlere Wellenlänge des sichtbaren Lichtes ist.

g) und / oder aus der Gruppe der mineralischen Stoffe mit natürlicher, elektrischer Leitfähigkeit wie Zinkblende

**9.** Beschichtungsstoff nach Anspruch 1 **dadurch gekennzeichnet, daß** mindestens ein weiterer Füllstoff zugegeben werden, der im Wellenlängenbereich des sichtbaren Lichtes transparent ist und im Wellenlängenbereich des thermischen Infrarot von 5 bis 100 μm, mindestens aber im Wellenlängenbereich von 5 bis 25 μm, einen geringen Brechungsindex unter 2.5 bevorzugt unter 2.0 aufweist und der in diesem Wellenlängenbereich eine geringe Absorption < 80% bevorzugt < 60% hat und dessen mittlere Teilchengröße bei 0.3 bis 30 μm bevorzugt 0.5 bis 20 μm liegt

**10.** Beschichtungsstoff nach Anspruch 9 **dadurch gekennzeichnet, daß** der mindestens eine, weitere Füllstoff ausgewählt ist aus der Gruppe der anorganischen Füllstoffe wie Calciumcarbonat, Calciumsulfat, Calciumfluorid, Magnesiumcarbonat und/oder aus der Gruppe der organischen Füllstoffe wie Acrylat, Acrylnitril Copolymere, Vinyliden Chlorid Copolymere, Styrol-Acrylat, Polyäthylen, Polyäthylen-Oxidat, chlorsulfonierte Polyäthylene, Ethylen-Acrylsäure-Copolymere, Methacrylat, Vinylpyrrolidon-Vinylacetat-Copolymere, Polyvinylpyrrolidon, Polyisopropylacrylat, Polyurethane bestehen oder aus Cyclokautschuk, Butylkautschuk, Kohlenwasserstoffharz, α-Methylstyrol-Acrynitril-Copolymere, Polyesterimid, Acrylsäurebutylester, Polyacrylsäureester.

**11.** Beschichtungsstoff nach Ansprüchen 9 oder 10 **dadurch gekennzeichnet, daß** der mindestens eine, weitere Füllstoff in der Form von Mikrohohlkugeln vorliegt und einen mittleren Durchmesser von 20 bis 250 μm, bevorzugt von 40 bis 120 μm hat.

**12.** Beschichtungsstoff nach Anspruch 1 **dadurch gekennzeichnet, daß** zur Einfärbung im sichtbaren Bereich mindestens eine Art Farbpigment eingesetzt wird, die im Wellenlängenbereich des thermischen Infrarot von 5 bis 25 μm eine hohe Transmission > 40% bevorzugt > 60% aufweist und die im gesamten solaren Spektrum von 0.4 bis 2.5 μm eine hohe Absorption von > 30% bevorzugt > 50% aufweist, die ausgewählt ist aus der Gruppe der anorganischen Farbpigmente, insbesondere der Metalloxide wie Eisenoxide, Chromoxide aber auch Ferri-ferrocyanide der Formel $Fe_4[Fe(CN)_6]_3$ wie Mannox Eisenblau der Degussa und aus der Gruppe der organischen Farbpigmente wie das Paliogen (Marke) Schwarz S0084 der BASF aus der Gruppe der Perylene.

**13.** Beschichtungsstoff nach Anspruch 1. **dadurch gekennzeichnet, daß** die ersten, plättchenförmigen Teilchen von der Art sind, daß sie durch ein elektrisches Feld oder ein Magnetfeld ausrichtbar sind und damit einen winkelabhängigen Emissionsgrad der Gesamtanordnung bewirken.

**14.** Beschichtungsstoff nach Ansprüchen 1, 3 oder 8 **dadurch gekennzeichnet, daß** die Oberflächen reagibler Metalle und Materialien durch Fettsäuren, Chromatieren oder Phosphatieren geschützt sind.

**15.** Beschichtungsstoff nach Anspruch 1 oder 3 **dadurch gekennzeichnet, daß** es sich bei den ersten, plättchenförmigen Teilchen aus elektrisch nicht leitendem Material, um Kunstoff oder mineralischen Glimmer handelt.

**16.** Verfahren zum Auftragen eines Beschichtungsstoffes **dadurch gekennzeichnet, daß** ein Beschichtungsstoff nach einem der vorhergehenden Ansprüche verwendet wird, wobei der Beschichtungsstoff die ersten, plättchenförmigen Teilchen enthalten muß und daß während und / oder nach dem Aufbringen des Beschichtungsstoffes auf einen Träger ein elektrisches Feld und / oder Magnetfeld angewendet wird.

## Claims

**1.** Coating material **characterised by**

a) a binder with considerable transparency of at least 30 %, preferably >50 %, in the range of visible light from 0.35 to 0.7 μm and with at least 20 %, preferably >40 %, in the range of thermal infrared from 5 to 100 μm, at least 5 to 15 μm,

b) first platelet-like particles which reflect in the wavelength range of thermal infrared from 5 to 100 μm, but at

least from 5 to 25 µm, and their dimensions L X B X D are L = 5 - 100 µm, B = 5 - 100 µm and D = 0.1 - 5 µm, preferably L = 30 - 60 µm, B = 30 - 60 µm and D = 0.5 - 1.5 µm, wherein L = length, B = width and D = thickness, and/or first spherical particles, which backscatter (Mie backscattering) in the wavelength range of thermal infrared from 5 to 100 µm, but at least from 5 to 25 µm and have a transmittance in this wavelength range of at least 20 % and are present as monocrystals, wherein the average diameter of the first spherical particles d is determined by the formula

$$d = 10 \ \mu m/2.1 \cdot (n_{T\ 10} - n_{B\ 10}),$$

wherein

$n_{T\ 10}$ = refractive index of the first spherical particle at the wavelength 10 µm, and
$n_{B\ 10}$ = refractive index of the binder at the wavelength 10 µm.

and/or second spherical particles, which have and/or form a cavity in the dry state, which consist of a material which has a transmittance of >20 %, preferably >30 %, in the range of thermal infrared from 5 to 100 µm, but at least from 5 to 25 µm, and which backscatter and/or reflect in the wavelength range of thermal infrared from 5 to 100 µm, but at least from 5 to 25 µm and their average diameter is 2 to 20 µm,

c) second particles which reflect and/or backscatter in the wavelength range of visible light from 0.35 to 0.7 µm and have a transmittance >20 %, preferably >40 %, in the wavelength range of thermal infrared from 5 to 100 µm, but at least from 5 to 25 µm, and which are present as monocrystals, wherein the average diameter of the second particles d is determined by the formula

$$d = 0.55 \ \mu m/2.1 \cdot (n_{T\ 0.55} - n_{B\ 0.55}),$$

wherein

$n_{T\ 0.55}$ = refractive index of the second particle at the wavelength 0.55 µm, and
$n_{B\ 0.55}$ = refractive index of the binder at the wavelength 0.55 µm,

and/or polymer pigments, which have a transmittance >20 %, preferably >30 %, in the thermal infrared range from 5 to 100 µm, but at least 8 to 14 µm, and which have and/or form a cavity in the dry state, wherein the average diameter of the polymer pigment particles is 0.2 to 2 µm, preferably 0.3 to 1 µm,

d) third spherical particles which are electrically conductive and have a low absorption <80 %, preferably <60 %, in the range of thermal infrared from 5 to 25 µm and their average diameter is 0.1 to 2 µm, preferably 0.2 to 1 µm,

e) other additives known per se, which are used conventionally in coatings, namely solvents, such as water, aromatic solvents, such as white spirit, xylene, toluene, polar solvents, such as alcohols, and thickeners, thixotropic agents, foam suppressors, dispersing agents for the given particles, additives for reducing the film-forming temperature, such as glycols and benzine.

2.  Coating material according to claim 1, **characterised in that** the binder is selected

a) from the group comprising aqueous dispersions and emulsions, which includes dispersions and emulsions based on acrylate, styrene-acrylate, polyethylene, polyethylene oxidate, ethylene-acrylic acid copolymers, methacrylate, vinylpyrrolidone-vinyl acetate copolymers, polyvinylpyrrolidone, polyisopropyl acrylate, polyurethanes and/or,
b) from the group comprising solvent-containing binders, which includes acryl, cyclised rubber, butyl rubber, hydrocarbon resin, α-methylstyrene-acrylonitrile copolymers, polyester imide, butyl acrylate, polyacrylates, polyurethanes, aliphatic polyurethanes, chlorosulphonated polyethylene and/or,
c) from the group comprising thermoplastic materials, such as polyolefins and polyvinyl compounds, in particular polyethylene, polypropylene, Teflon, polyamide.

3. Coating material according to claim 1, **characterised in that** the first platelet-like particles consist of at least one material which is selected from

a) metal and/or metal alloys, selected from aluminium, aluminium bronze, antimony, chromium, iron, gold, iridium, copper, magnesium, molybdenum, nickel, palladium, platinum, silver, tantalum, bismuth, tungsten, zinc, tin, bronze, brass, China silver, nickel/chromium alloy, nickeline, constantan, manganin and steel,

b) and/or from electrically non-conductive materials, which are coated and/or covered with metal or metal alloys selected from aluminium, aluminium bronze, antimony, chromium, iron, gold, iridium, copper, magnesium, molybdenum, nickel, palladium, platinum, silver, tantalum, bismuth, tungsten, zinc, tin, bronze, brass, China silver, nickel/chromium alloy, nickeline, cinstantan, manganin and steel or electrically conductive tin oxide,

c) and/or the first platelet-like particles are formed as layered pigments which are composed of at least three layers, wherein the central layer has a lower refractive index than the outer layers and their materials are selected from the group of materials which have a transmission > 20 %, preferably > 40 %, in the wavelength range of thermal infrared from 5 to 25 $\mu$m, which comprises

(1) inorganic materials, such as metal sulphides, selected from zinc sulphide and lead sulphide, metal selenides, such as zinc selenide, fluorides selected from calcium fluoride, lithium fluoride, barium fluoride and sodium fluoride, antimonides, such as indium antimonide, metal oxides selected from zinc oxide, magnesium oxide, antimony oxide, from barium titanate, barium ferrite, calcium sulphate, barium sulphate and from mixed crystals of the said materials and electrically conductive tin oxide

(2) and/or organic materials selected from acrylate, styrene-acrylate, polyethylene, polyethylene oxidate, chlorosulphonated polyethylenes, ethylene-acrylic acid copolymers, methacrylate, vinylpyrrolidone-vinyl acetate copolymers, polyvinylpyrrolidone, polyisopropyl acrylate, polyurethanes, cyclised rubber, butyl rubber, hydrocarbon resin, $\alpha$-methylstyrene-acrylonitrile copolymers, polyester imide, butyl acrylate, polyacrylates, the refractive index of which is increased if required by the addition of colloidal metal particles.

4. Coating material according to claim 1, **characterised in that** the first spherical particles consist of at least one material which is selected from metal sulphides, such as zinc sulphide and lead sulphide, from metal selenides, such as zinc selenide, from fluorides, such as calcium fluoride, lithium fluoride, barium fluoride and sodium fluoride, from carbonates, such as calcium carbonate or magnesium carbonate, from antimonides, such as indium antimonide, from metal oxides, such as zinc oxide, magnesium oxide, antimony oxide, from barium titanate, barium ferrite, calcium sulphate, barium sulphate and from mixed crystals of the said materials, selected from mixed crystals of barium sulphate with zinc sulphide, such as the lithopones from gentle-life chemistry.

5. Coating material according to claim 1, **characterised in that** the material of the second spherical particles consist of at least one material which is selected from acrylate, styrene-acrylate, acrylonitrile copolymer, polyethylene, polyethylene oxidate, chlorosulphonated polyethylene, ethylene-acrylic acid copolymer, methacrylate, vinylpyrrolidone-vinyl acetate copolymer, vinylidene chloride copolymer, polyvinylpyrrolidone, polyisopropyl acrylate, polyurethane, from cyclised rubber, butyl rubber, hydrocarbon resin, $\alpha$-methylstyrene-acrylonitrile copolymer, polyester imide, butyl acrylate, polyacrylates.

6. Coating material according to claim 1, **characterised in that** the second particles consist of at least one material, which is selected from metal sulphides, such as zinc sulphide and lead sulphide, from metal selenides, such as zinc selenide, from fluorides selected from calcium fluoride, lithium fluoride, barium fluoride and sodium fluoride, from carbonates, such as calcium carbonate or magnesium carbonate, from antimonides, such as indium antimonide, from metal oxides, such as zinc oxide, magnesium oxide, antimony oxide, from barium titanate, barium ferrite, calcium sulphate, barium sulphate and from mixed crystals of the said materials, such as mixed crystals of barium sulphate with zinc sulphide, such as the lithopones from gentle-life chemistry.

7. Coating material according to claim 1, **characterised in that** the materials of the second particles, which are present as polymer pigment, consist of at least one material which is selected from acrylate, styrene-acrylate, acrylonitrile copolymer, polyethylene, polyethylene oxidate, chlorosulphonated polyethylene, ethylene-acrylic acid copolymer, methacrylate, vinylpyrrolidone-vinyl acetate copolymer, vinylidene chloride copolymer, polyvinylpyrrolidone, polyisopropyl acrylate, polyurethane, from cyclised rubber, butyl rubber, hydrocarbon resin, $\alpha$-methylsty-

rene-acrylonitrile copolymer, polyester imide, butyl acrylate, polyacrylates.

8.  Coating material according to claim 1, **characterised in that** the third spherical particles are electrically conductive particles which are clear or transparent in the visible range and consist of a material which is selected from

    a) the group of metals, such as aluminium, antimony, chromium, iron, gold, iridium, copper, magnesium, molybdenum, nickel, palladium, platinum, silver, tantalum, bismuth, tungsten, zinc and tin,

    b) and/or from the group of metal alloys, such as bronze, brass, China silver, nickel/chromium, nickeline, constantan, manganin and steel,

    c) and/or from the group of electrically conductive polymers, such as polypyrrole or polyaniline, the diameter of which is 0.1 to 1.2 times the average wavelength of 0.55 µm of visible light, preferably lower than the average wavelength of visible light,

    d) and/or from the group of electrically conductive coated pigments, such as from the group silicates, such as talcum, kaolin, mica, feldspar, wollastonite, silicon dioxide, or from the group metal oxides, such as titanium dioxide or barium sulphate which are surrounded by antimony-doped or by fluorine-doped tin oxide,

    e) and/or from the group of pigments which are produced by doping with doping agents known per se, such as alkali metal, ammonium or alkaline earth metal fluorides, and tin II fluoride, hydrogen fluoride and antimony III oxide, such as electrically conductive tin oxide,

    f) and/or from the group of conductive carbon blacks, the diameter of which is 0.1 to 1.2 times the average wavelength of visible light of 0.55 µm, preferably lower than the average wavelength of visible light,

    g) and/or from the group of mineral materials having natural, electrical conductivity, such as zinc blende.

9.  Coating material according to claim 1, **characterised in that** at least one further filler is added, which is transparent in the wavelength range of visible light and has a low refractive index below 2.5, preferably below 2.0, in the wavelength range of thermal infrared from 5 to 100 µm, but at least in the wavelength range from 5 to 25 µm, and which has a low absorption <80 %, preferably < 60 %, in this wavelength range and its average particle size is 0.3 to 30 µm, preferably 0.5 to 20 µm.

10. Coating material according to claim 9, **characterised in that** the at least one further filler is selected from the group of inorganic fillers, such as calcium carbonate, calcium sulphate, calcium fluoride, magnesium carbonate and/or from the group of organic fillers, such as acrylate, acrylonitrile copolymers, vinylidene chloride copolymers, styrene-acrylate, polyethylene, polyethylene oxidate, chlorosulphonated polyethylenes, ethylene-acrylic acid copolymers, methacrylate, vinylpyrrolidone-vinyl acetate copolymers, polyvinylpyrrolidone, polyisopropyl acrylate, polyurethanes or of cyclised rubber, butyl rubber, hydrocarbon resin, α-methylstyrene-acrylonitrile copolymers, polyester imide, butyl acrylate, polyacrylates.

11. Coating material according to claims 9 or 10, **characterised in that** the at least one further filler is present in the form of microspheres and has an average diameter of 20 to 250 µm, preferably 40 to 120 µm.

12. Coating material according to claim 1, **characterised in that** for pigmentation in the visible range, at least one type of colour pigment is used, which has a high transmission > 40 %, preferably >60 %, in the wavelength range of thermal infrared from 5 to 25 µm and which has a high absorption of >30 %, preferably >50 %, in the entire solar spectrum from 0.4 to 2.5 µm, which is selected from the group of inorganic coloured pigments, in particular metal oxides, such as iron oxides, chromium oxides but also ferric cyanoferrate of the formula $Fe_4[Fe(CN)_6]_3$, such as Mannox Prussian blue from Degussa and from the group of organic coloured pigments, such as Paliogen (trademark) Black S0084 from BASF from the group of perylenes.

13. Coating material according to claim 1, **characterised in that** the first platelet-like particles are of the type that they can be aligned by an electrical field or a magnetic field and hence effect angle-dependent emittance of the entire arrangement.

14. Coating material according to claims 1, 3 or 8, **characterised in that** the surfaces of reactive metals and materials are protected by fatty acids, chromatising or phosphatising.

15. Coating material according to claim 1 or 3, **characterised in that** the first platelet-like particles of electrically non-conductive material are plastic or mineral mica.

16. Process for applying a coating material, **characterised in that** a coating material according to one of the preceding claims is used, wherein the coating material must contain the first platelet-like particles, and **in that** an electrical field and/or magnetic field is used during and/or after applying the coating material to a carrier.

**Revendications**

1. Matière de revêtement, **caractérisée par**

a) un liant présentant une grande transparence d'au moins 30 %, de préférence > 50 %, dans la gamme de la lumière visible de 0,35 à 0,7 µm et d'au moins 20 %, de préférence > 40 % dans la gamme de l'infrarouge thermique de 5 à 100 µm, au moins de 5 à 15 µm,
b) des premières particules en forme de plaquettes, qui fournissent une réflexion dans la gamme des longueurs d'onde de l'infrarouge thermique de 5 à 100 µm, mais au moins de 5 à 25 µm, et dont les dimensions L x B x D, L = 5 - 100 µm, B = 5 - 100 µm et D = 0,1 - 5 µm, de préférence L = 30 - 60 µm, B = 30 - 60 µm et D = 0,5 - 1,5 µm, avec L = longueur, B = largeur et D = épaisseur, et/ou des premières particules de forme sphérique, qui réalisent une rétrodiffusion (rétrodiffusion de Mie) dans la gamme des longueurs d'onde de l'infrarouge thermique de 5 à 100 µm, mais au moins de 5 à 25 µm et possèdent un coefficient de transmission d'au moins 20 % dans cette gamme de longueurs d'onde et sont présentes sous la forme de monocristaux, le diamètre moyen des premières particules sphériques d étant déterminé par la formule

$$d = 10 \ \mu m \ / \ 2,1 \ . \ (n_{T\ 10} - n_{B\ 10}),$$

avec

$n_{T\ 10}$ = indice de réfraction de la première particule sphérique pour la longueur d'onde de 10 µm, et
$n_{B\ 10}$ = indice de réfraction du liant pour la longueur d'onde de 10 µm,

et/ou des secondes particules sphériques, qui à l'état sec présentent et/ou forment une cavité et qui sont constituées par un matériau qui possède un coefficient de transmission > 20 %, de préférence > 30 %, dans la gamme de l'infrarouge thermique de 5 à 100 µm, mais au moins de 5 à 25 µm, et qui réalise une rétrodiffusion et/ou une réflexion dans la gamme des longueurs d'onde de l'infrarouge thermique de 5 à 100 µm, mais au moins de 5 à 25 µm et dont le diamètre moyen se situe entre 2 et 20 µm,
c) des secondes particules, qui réalisent une réflexion et/ou une rétrodiffusion dans la gamme des longueurs d'onde de la lumière visible de 0,35 à 0,7 µm et possèdent un coefficient de transmission > 20 %, de préférence > 40 % dans la gamme des longueurs d'onde de l'infrarouge thermique de 5 à 100 µm, mais au moins de 5 à 25 µm et sont présentes sous la forme de monocristaux, le diamètre moyen des secondes particules d étant déterminé par la formule

$$d = 0,55 \ \mu m \ / \ 2,1 \bullet (n_{T\ 0,55} - n_{B\ 0,55}),$$

avec

$n_{T\ 0,55}$ = indice de réfraction de la seconde particule pour la longueur d'onde de 0,55 µm, et
$n_{B\ 0,55}$ = indice de réfraction du liant pour la longueur d'onde 0,55 µm,

et/ou des pigments polymères, qui possèdent un coefficient de transmission > 20 %, de préférence > 30 % dans la gamme de l'infrarouge thermique de 5 à 100 µm, mais au moins de 8 à 14 µm, et qui possèdent et/ou forment à l'état sec une cavité, le diamètre moyen des particules de pigment polymère se situant entre 0,2 et 2 µm et de préférence entre 0,3 et 1 µm,
d) des troisièmes particules sphériques, qui sont électriquement conductrices et possèdent une faible absorption < 80 %, de préférence < 60 % dans la gamme de l'infrarouge thermique de 5 à 25 µm et dont le diamètre moyen est compris entre 0,1 et 2 µm et de préférence entre 0,2 et 1 µm,

e) d'autres additifs connus en soi, qui sont utilisés habituellement dans des revêtements, à savoir des solvants tels que l'eau, des solvants aromatiques tels que le white-spirit, le xylène, le toluène, des solvants polaires, tels que des alcools, et des épaississants, des agents thixotropes, des agents de moussage, des agents de distribution pour les particules indiquées, des additifs pour réduire la température de formation de films, tels que des glycols et de l'essence.

**2.** Matière de revêtement selon la revendication 1, **caractérisée en ce que** le liant est choisi

a) parmi le groupe des dispersions et émulsions aqueuses qui comprend des dispersions et des émulsions à base de: acrylate, acrylate de styrène, polyéthylène, oxydate de polyéthylène, copolymère éthylène-acide acrylique, méthacrylate, copolymères vinylpyrolidone-acétate de vinyle, polyvinylpyrolidone, acrylate de polyisopropyle, polyuréthane et/ou

b) parmi le groupe des liants contenant un solvant, qui inclut: acide acrylique, caoutchouc cyclique, caoutchouc butyle, résine d'hydrocarbure, copolymères α-méthylstyrène-acrylonitrile, imide de polyester, butylester de l'acide acrylique, ester de l'acide polyacrylique, polyuréthane, polyuréthane aliphatique, polyéthylène chlorosulfoné et/ou

c) parmi le groupe des matières thermoplastiques tels que des polyoléfines et des composés de polyvinyle, notamment le polyéthylène, le polypropylène, le Téflon, le polyamide.

**3.** Matière de revêtement selon la revendication 1, **caractérisée en ce que** les premières particules en forme de plaquettes sont constitués par au moins un matériau, qui est sélectionné parmi

a) un métal et/ou des alliages métalliques choisis parmi: aluminium, bronze d'aluminium, antimoine, chrome, fer, or, iridium, cuivre, magnésium, molybdène, nickel, palladium, platine, argent, tantale, bismuth, tungstène, zinc, étain, bronze, laiton, argentan, alliage nickel/chrome, nickeline, constantan, mangamine et acier,

b) et/ou à partir de matériaux non conducteurs, qui sont revêtus et/ou recouverts d'un métal ou d'alliages métalliques sélectionnés parmi: aluminium, bronze d'aluminium, antimoine, chrome, fer, or, iridium, cuivre, magnésium, molybdène, nickel, palladium, platine, argent, tantale, bismuth, tungstène, zinc, étain, bronze, laiton, argentan, alliage nickel/chrome, nickeline, constantan, manganine et acier ou oxyde d'étain électriquement conducteur,

c) et/ou les premières particules en forme de plaquette sont agencées sous la forme de pigments formés de couches, qui sont constitués d'au moins trois couches, la couche médiane possédant un indice de réfraction inférieur à celui des couches extérieures et leurs matériaux étant sélectionnés parmi le groupe des matériaux, qui possèdent un coefficient de transmission > 20 %, de préférence > 40 %, dans la gamme des longueurs d'onde de l'infrarouge thermique de 5 à 25 µm, et qui comprend

(1) des substances minérales, telles que les sulfures métalliques, sélectionnés parmi le sulfure de zinc et le sulfure de plomb, des séléniures métalliques tels que le séléniure de zinc, des fluorures sélectionnés à partir du fluorure de calcium, de fluorure de lithium, du fluorure de baryum et du fluorure de sodium, des antimoniures tels que l'antimoniure d'indium, des oxydes métalliques sélectionnés parmi l'oxyde de zinc, l'oxyde de magnésium, l'oxyde d'antimoine, parmi le titanate de baryum, la ferrite de baryum, le sulfate de calcium, de sulfate de baryum et à partir de cristaux mixtes desdites substances et d'oxyde d'étain électriquement conducteur,

(2) et/ou des substances organiques choisies parmi: acrylate, acrylate de styrène, polyéthylène, oxydate de polyéthylène, polyéthylènes chlorosulfonés, copolymères éthylène-acide acrylique, méthacrylate, copolymères vinylpyrolidone-acétate de vinyle, polyvinylpyrolidone, acrylate de polyisopropyle, polyuréthane, caoutchouc cyclique, caoutchouc butyle, résine d'hydrocarbure, copolymères α-méthylstyrène-acrylonitrile, polyesterimide, butylester de l'acide acrylique, ester de l'acide polyacrylique, dont l'indice de réfraction est accru au choix par adjonction de particules métalliques colloïdales.

**4.** Matière de revêtement selon la revendication 1, **caractérisée en ce que** les premières particules sphériques sont constituées par au moins un matériau qui est sélectionné parmi

des sulfures métalliques tels que sulfure de zinc et le sulfure de plomb, des séléniures métalliques tels que le séléniure de zinc, des fluorures, tels que le fluorure de calcium, le fluorure de lithium, le fluorure de baryum et le fluorure de sodium, des carbonates tels que le carbonate de calcium, le carbonate de magnésium, des antimoniures tels que l'antimoniure d'indium, des oxydes métalliques tels que l'oxyde de zinc, l'oxyde de magnésium, l'oxyde d'antimoine, le titanate de baryum, la ferrite de baryum, le sulfate de calcium et des cristaux mixtes des substances indiquées, sélectionnés parmi les cristaux mixtes de sulfate de baryum avec du sulfure de zinc et des lithopones de la chimie Sachtleben.

**5.** Matière de revêtement selon la revendication 1, **caractérisée en ce que** la matière des secondes particules sphériques est constituée par au moins une matière qui est sélectionnée parmi

acrylate, acrylate de styrène, copolymère d'acrylonitrile, polyéthylène, oxydate de polyéthylène, polyéthylène chlorosulfoné, copolymère éthylène-acide acrylique, méthacrylate, copolymère vinylpyrolidone-acétate de vinyle, copolymère vinylidène-chlorure, polyvinylpyrolidone, acrylate de polyisopropyle, polyuréthane, caoutchouc cyclique, caoutchouc butyle, résine d'hydrocarbure, copolymère $\alpha$-méthylstyrène-acrylonitrile, polyesterimide, butylester de l'acide acrylique, ester de l'acide polyacrylique.

**6.** Matière de revêtement selon la revendication 1, **caractérisée en ce que** les secondes particules sont constituées par au moins un matériau qui est sélectionné parmi

des sulfures métalliques tels que sulfure de zinc et le sulfure de plomb, des séléniures métalliques tels que le séléniure de zinc, des fluorures, tels que le fluorure de calcium, le fluorure de lithium, le fluorure de baryum et le fluorure de sodium, des carbonates tels que le carbonate de calcium, le carbonate de magnésium, des antimoniures tels que l'antimoniure d'indium, des oxydes métalliques tels que l'oxyde de zinc, l'oxyde de magnésium, l'oxyde d'antimoine, le titanate de baryum, la ferrite de baryum, le sulfate de calcium et des cristaux mixtes des substances indiquées, sélectionnés parmi les cristaux mixtes de sulfate de baryum avec du sulfure de zinc et des lithopones de la chimie Sachtleben.

**7.** Matière de revêtement selon la revendication 1, **caractérisée en ce que** la matière des secondes particules, qui sont présentes en tant que pigment polymère, est constituée par une matière de base qui est sélectionnée parmi

acrylate, acrylate de styrène, copolymère d'acrylonitrile, polyéthylène, oxydate de polyéthylène, polyéthylène chlorosulfoné, copolymère éthylène-acide acrylique, méthacrylate, copolymère vinylpyrolidone-acétate de vinyle, copolymère vinylidène-chlorure, polyvinylpyrolidone, acrylate de polyisopropyle, polyuréthane, caoutchouc cyclique, caoutchouc butyle, résine d'hydrocarbure, copolymère $\alpha$-méthylstyrène-acrylonitrile, polyesterimide, butylester de l'acide acrylique, ester de l'acide polyacrylique.

**8.** Matière de revêtement selon la revendication 1, **caractérisée en ce qu'**en ce qui concerne les troisièmes particules de forme sphérique, il s'agit de particules électriquement conductrices qui sont claires ou transparentes dans la gamme visible, et sont constituées par au moins une matière de base qui est sélectionnée parmi

a) le groupe des métaux tels que, aluminium, antimoine, chrome, fer, or, iridium, cuivre, magnésium, molybdène, nickel, palladium, platine, argent, tantale, bismuth, tungstène, zinc et étain
b) et/ou à partir du groupe des alliages métalliques tels que bronze, laiton, argentan, alliage nickel/chrome, nickeline, constantan, manganine et acier,
c) et/ou dans le groupe des polymères électriquement conducteurs tels que le polypyrole ou la polyaniline, dont le diamètre se situe entre 0,1 et 1,2 fois la longueur d'onde moyenne de 0,55 $\mu$m de la lumière visible, et de préférence inférieur à la longueur d'onde de la lumière visible,
d) et/ou à partir du groupe des pigments produisant un revêtement électriquement conducteur comme par exemple à partir du groupe des silicates tels que le talc, le kaolin, le mica, le feldspath, la wollastonite, le bioxyde de silicium ou à partir du groupe des oxydes métalliques tels que le dioxyde de titane ou à partir de sulfate de baryum, qui sont enveloppés par de l'oxyde d'étain dopé par de l'antimoine ou dopé par du fluor,
e) et/ou à partir du groupe des pigments, qui sont formés par dopage avec des dopants connus en soi tels que des fluorures alcalins, des fluorures d'ammonium ou des fluorures alcalino-terreux ainsi que du fluorure d'étain II, des hydrocarbures fluorés et de l'oxyde d'antimoine III, tel que de l'oxyde d'étain électriquement conducteur,
f) et/ou à partir du groupe des suies conductrices, dont le diamètre est compris entre 0,1 et 1,2 fois la longueur d'onde moyenne de la lumière visible de 0,55 $\mu$m, et de préférence inférieur à la longueur d'onde moyenne de la lumière visible,
g) et/ou à partir du groupe des substances minérales présentant une conductivité électrique naturelle, telles que la blende.

**9.** Matière de revêtement selon la revendication 1, **caractérisée en ce qu'**on ajoute au moins une autre charge, qui est transparente dans le domaine des longueurs d'onde de la lumière visible et possède un faible indice de réfraction inférieur à 2,5 et de préférence inférieur à 2,0 dans la gamme des longueurs d'onde de l'infrarouge thermique de 5 à 100 µm, mais au moins dans la gamme des longueurs d'onde de 5 à 25 µm, et qui possède, dans cette gamme de longueurs d'onde une absorption faible < 80 % et de préférence < 60 % et dont la taille moyenne des particules est située entre 0,3 et 30 µm et de préférence entre 0,5 et 20 µm.

10. Matière de revêtement selon la revendication 9, **caractérisée en ce qu'**au moins une autre charge est choisie dans le groupe des charges minérales telles que le carbonate de calcium, le sulfate de calcium, le fluorure de calcium, le carbonate de magnésium et/ou dans le groupe des charges organiques telles que l'acrylate, des copolymères d'acrylonitrile, des copolymères de chlorure de vinylidène, de l'acrylate de styrène, du polyéthylène, de l'oxydate de polyéthylène, des polyéthylènes chlorosulfonés, des copolymères éthylène-acide acrylique, le méthacrylate, des copolymères vinylpyrolidone-acétate de vinyle, du polyvinylpyrolidone, l'acrylate de polyisopropyle, du polyuréthane, ou à partir de caoutchouc cyclique, de caoutchouc butyle, de résine d'hydrocarbure, de copolymères $\alpha$-méthylstyrène-acrylomitrile, de polyesterimide, de butylester de l'acide acrylique, d'ester de l'acide polyacrylique.

11. Matière de revêtement selon la revendication 9 ou 10, **caractérisée en ce que** la au moins une autre charge se présente sous la forme de microsphères creuses et possède un diamètre moyen compris entre 20 et 250 µm, et de préférence entre 40 et 120 µm.

12. Matière de revêtement selon la revendication 1, **caractérisée en ce que** pour la coloration dans la gamme visible, on utilise au moins une sorte de pigment, qui fournit une transmission élevée > 40 %, de préférence > 60 %, dans la gamme des longueurs d'onde de l'infrarouge thermique de 5 à 25 µm, et possède une absorption élevée > 30 %, et de préférence > 50 %, dans l'ensemble du spectre solaire de 0,4 à 0,5 µm et qui est sélectionné dans le groupe des pigments minéraux, notamment des oxydes métalliques tels que les oxydes de fer, les oxydes de chrome, mais également des ferri-ferrocyanures répondant à la formule $Fe_4 [Fe(CN)_6]_3$ tel que le bleu de Prusse Mannox de Degussa et dans le groupe des pigments organiques tels que le Paliogen (marque), Schwarz S0084 de BASF, à partir du groupe des pérylènes.

13. Matière de revêtement selon la revendication 1, **caractérisée en ce que** les premières particules en forme de plaquettes sont du type tel qu'elles peuvent être orientées au moyen d'un champ électrique ou d'un champ magnétique et déterminent par conséquent un degré d'émission d'ensemble du dispositif, qui dépend de l'angle.

14. Matière de revêtement selon les revendications 1, 3 ou 8, **caractérisée en ce que** les surfaces de métaux et de matériaux aptes à réagir sont protégées par application d'acide gras, par chromatage ou par phosphatage.

15. Matière de revêtement selon la revendication 1 ou 3, **caractérisée en ce qu'**en ce qui concerne les premières particules en forme de plaquettes, il s'agit d'un matériau non électriquement conducteur, d'une matière plastique ou de mica minéral.

16. Procédé pour déposer une matière de revêtement, **caractérisé en ce qu'**on utilise une matière de revêtement selon l'une des revendications précédentes, la matière de revêtement devant contenir les premières particules en forme de plaquettes, et que pendant et/ou après l'application de la matière de revêtement, on applique à un support un champ électrique et/ou un champ magnétique.